# FASCICULE DE BREVET EUROPEEN

(11) **EP 4 115 323 B1**
(45) Date de publication et mention de la délivrance du brevet: **23.07.2025**
(21) Numéro de dépôt: 21714329.6
(22) Date de dépôt: 02.03.2021
(51) Int. Cl.: G06V 10/143, G06V 10/147, G06V 20/52, G03B 15/05, G03B 17/48, G03B 17/56, G03B 19/22, G03B 37/04, H04N 7/18, H04N 23/11, H04N 23/45, H04N 23/51, H04N 23/54, G08B 13/196, G03B 11/04

(54) **DISPOSITIF NOTAMMENT POUR LA DÉTECTION ET ÉVENTUELLEMENT L'IDENTIFICATION D'AU MOINS UNE CIBLE À L'INTÉRIEUR D'UN VOLUME DÉTERMINÉ ET ENSEMBLE COMPRENANT UN TEL DISPOSITIF**
VORRICHTUNG INSBESONDERE ZUR ERFASSUNG UND GEGEBENENFALLS IDENTIFIZIERUNG MINDESTENS EINES ZIELES INNERHALB EINES BESTIMMTEN VOLUMENS UND ANORDNUNG MIT EINER SOLCHEN VORRICHTUNG
DEVICE PARTICULARLY FOR DETECTING AND POTENTIALLY IDENTIFYING AT LEAST ONE TARGET INSIDE A DETERMINED VOLUME AND ASSEMBLY COMPRISING SUCH A DEVICE

(30) Priorité: 03.03.2020 FR 2002112
(43) Date de publication de la demande: 11.01.2023
(73) Titulaire: Naostage, 44321 Nantes Cedex 3 (FR); Institut National de Recherche en Informatique et en Automatique, 78150 Le Chesnay-Rocquencourt (FR)
(72) Inventeur: CALES, Paul, 44000 NANTES (FR); VAN DE HEL, Nathan, 75011 PARIS (FR); LE DOEUFF, Olivier, 35000 RENNES (FR); VAUFREYDAZ DOMINIQUE, Dominique, 38760 SAINT PAUL DE VARCES (FR); HEIDMANN, Samuel, 73800 SAINTE HELENE DU LAC (FR); BORKOWSKI, Stanislaw, 38570 THEYS (FR)
(74) Mandataire: Ipsilon
(86) Numéro de dépôt international: PCT/FR2021/050349
(87) Numéro de publication internationale: WO 2021/176173

(56) Documents cités:
- US-A1- 2014 139 643
- US-B1- 9 185 391

## Description

La présente invention concerne un dispositif notamment pour la détection et éventuellement l'identification d'au moins une cible à l'intérieur d'un volume déterminé, ainsi qu'un ensemble comprenant un tel dispositif.

Elle concerne en particulier un dispositif notamment pour la détection et éventuellement l'identification d'au moins une cible à l'intérieur d'un volume déterminé, ledit dispositif comprenant un système d'acquisition d'images.

Dans de nombreux domaines et en particulier dans celui du spectacle, des dispositifs de surveillance et de suivi ont été développés pour permettre notamment le suivi du déplacement des personnes occupant la scène. Ces dispositifs de surveillance et de suivi intègrent un système d'acquisition d'images dont les images sont traitées. Ces dispositifs de surveillance et de suivi fonctionnant en temps réel et en continu peuvent être couplés à des systèmes de commande de l'éclairage, de la vidéo et du son pour permettre de réaliser des effets audiovisuels en temps réel à partir de la position et des mouvements des personnes sur scène. Toutefois, la conception actuelle des dispositifs de surveillance et de suivi obligent les personnes devant être suivies à porter un boîtier équipé d'un système d'identification, tel que des diodes électroluminescentes ou une puce. Par ailleurs, des dispositifs d'imagerie sont connus comme l'illustrent les documents US 2014/0139643 et US 9185391. Toutefois, de tels dispositifs ne permettent pas le suivi d'une cible.

Un but de l'invention est de proposer un dispositif notamment pour la détection et éventuellement l'identification d'au moins une cible du type précité dont la conception permet de s'affranchir de la pose d'un boîtier d'identification sur les cibles à suivre sans nuire à la facilité de montage du dispositif.

A cet effet, l'invention a pour objet un dispositif notamment pour la détection et éventuellement l'identification d'au moins une cible à l'intérieur d'un volume déterminé, ledit dispositif comprenant un système d'acquisition d'images, caractérisé en ce que le système d'acquisition d'images comprend,
- au moins une caméra infrarouge sensible aux ondes dont la longueur d'onde est comprise entre 780 et 1400 nm,
- une caméra thermique sensible aux ondes comprises entre 3000 et 14000 nm et
- une caméra dite visible sensible aux ondes comprises entre 350 et 780 nm, en ce que lesdites caméras sont montées sur un support commun se présentant sous forme d'un corps allongé de type poutre, en ce que les caméras sont disposées sur le support commun avec les champs de vision desdites caméras présentant une zone d'intersection correspondant au volume à observer, en ce que les axes optiques desdites caméras disposées sur le support commun sont distincts et en ce que la distance entre les axes optiques d'au moins deux des caméras est comprise entre 10 cm et 2 m. La combinaison de 3 types de caméras et leur positionnement sur un support commun permettant d'une part, un montage simple et rapide du dispositif, d'autre part, une acquisition de données brutes suffisante pour permettre, après traitement desdites données, une détection d'au moins une cible mobile, en particulier en termes de mouvement et de position et donc son suivi même dans des conditions d'illumination difficiles.

Selon un mode de réalisation de l'invention, le support commun est portable et est muni d'au moins un organe d'accrochage. La réalisation d'un support commun se présentant extérieurement sous forme d'un corps allongé de type poutre facilite la préhension du dispositif et son portage. La présence d'un ou plusieurs organes d'accrochage autorise un montage aisé du dispositif au-dessus d'une scène. L'élévation du dispositif au-dessus d'une scène peut s'opérer de manière aisée du fait du caractère portable du dispositif.

Selon un mode de réalisation de l'invention, le support commun comprend une base support de réception des caméras, une enveloppe de type fourreau à l'intérieur de laquelle la base support est configurée pour s'insérer au moins partiellement, ladite enveloppe fourreau étant munie d'ouvertures, au moins certaines des ouvertures s'étendant au niveau des optiques des caméras disposées sur la base support à l'état inséré de la base support dans ladite enveloppe fourreau. Cette conception permet une maintenance aisée du dispositif tout en assurant une bonne protection des composants sensibles du dispositif notamment pendant les phases de transport, de stockage et d'installation du dispositif.

Selon l'invention, le dispositif comprend, pour au moins l'une des caméras, au moins un capot de protection de l'optique de ladite caméra monté à coulissement le long d'un axe parallèle à l'axe longitudinal du support commun allongé pour un déplacement de la partie dite active dudit capot entre une position active de protection de l'optique de la caméra dans laquelle la partie active du capot s'étend au moins partiellement en regard de ladite optique de la caméra et une position inactive dans laquelle l'optique de la caméra est non masquée. Le capot est de préférence positionné à l'intérieur de l'enveloppe fourreau, entre la base support et l'enveloppe fourreau, pour pouvoir être protégé au mieux d'un endommagement. Le capot peut être entraîné manuellement en déplacement à coulissement. En variante, le dispositif peut comprendre un système de commande d'entraînement en déplacement du ou d'au moins l'un des capots.

Selon l'invention, la partie active du capot est munie intérieurement, côté surface du capot en regard de l'optique, en position active de ladite partie active du capot, d'un cache monté mobile dans le sens d'un rapprochement ou d'un écartement de la partie active du capot, ledit cache formant, en position écartée du capot et en position active du capot, une chambre coiffant au moins l'optique de la caméra, cette chambre interposée entre le capot et l'optique de la caméra isolant l'optique de la caméra du capot. La présence d'une chambre dite étanche en particulier aux poussières permet de protéger les optiques des caméras pendant les phases de non utilisation des caméras. Il en résulte ainsi une double protection, à savoir à la fois une protection des optiques des caméras des contacts avec des objets extérieurs pouvant les endommager lors de l'installation/désinstallation du dispositif et lors de son transport, et une protection contre de la poussière pouvant venir se déposer sur les optiques.

Selon un mode de réalisation de l'invention, le ou au moins l'un des capots affecte la forme d'un U avec l'âme du U formant la partie active du capot et le cache est, pour son déplacement entre une position écartée et une position rapprochée du capot, équipé d'organes de guidage en prise respectivement l'un ou les uns avec au moins un chemin de guidage ménagé sur le capot, l'autre ou les autres avec au moins un chemin de guidage ménagé sur le support commun. Ainsi, le déplacement à coulissement du capot de la position inactive à la position active permet en parallèle le passage du cache de la position rapprochée du capot à la position écartée du capot.

Selon un mode de réalisation de l'invention, l'angle de vue de chaque caméra est inférieur à 90°. Il en résulte une optimisation de la précision spatiale de chaque caméra.

Selon un mode de réalisation de l'invention, la ou l'une des caméras visibles est disposée sur le support commun au moins entre une caméra thermique et une caméra infrarouge.

Selon un mode de réalisation de l'invention, les caméras infrarouges sont au moins au nombre de deux de même que les caméras thermiques. Cette disposition peut permettre une perception optimisée de la scène. De préférence, les caméras sont disposées sur le support pour former depuis une extrémité vers l'autre extrémité du support allongé une succession de caméras comprenant au moins une caméra thermique, une caméra infrarouge, une caméra visible, une caméra thermique et une caméra infrarouge.

Selon un mode de réalisation de l'invention, le support commun porte en sus des caméras au moins un émetteur de lumière non visible à l'œil nu. Cette configuration permet d'améliorer la perception des caméras infrarouges. En particulier, le ou chaque émetteur de lumière, tels que des diodes électroluminescentes, infrarouge, émet de préférence à l'intérieur d'une plage de longueurs d'onde comprise entre 780 et 1400 nm pour permettre une détection de ladite lumière par la ou les caméras infrarouges.

Selon un mode de réalisation de l'invention, les axes optiques des caméras sont parallèles et/ou les angles de vue des caméras sont identiques d'une caméra à une autre. Il en résulte une simplification du traitement mathématique des données brutes issues des caméras pour permettre notamment une reconstitution en 3D de la scène et une possibilité de minimiser le nombre de caméras.

Selon un mode de réalisation de l'invention, le dispositif comprend au moins un système de communication configuré pour permettre une communication des caméras du système d'acquisition d'images avec au moins un système émetteur et/ou récepteur de données. Le système de communication est donc configuré pour permettre l'adressage aux caméras de données de commande desdites caméras issues d'un système émetteur comprenant une unité de commande des caméras, et pour transférer les données brutes ou éventuellement prétraitées des caméras vers un système récepteur, ce système récepteur pouvant être commun ou distinct du système émetteur.

L'invention a encore pour objet un ensemble comprenant au moins un système émetteur et/ou récepteur de données et un dispositif notamment pour la détection et éventuellement l'identification d'au moins une cible à l'intérieur d'un volume déterminé, caractérisé en ce que le dispositif est du type précité et le ou au moins l'un des systèmes émetteur et/ou récepteur de données et les caméras du système d'acquisition sont configurés pour communiquer entre eux.

Selon un mode de réalisation dudit ensemble, le ou au moins l'un des systèmes émetteur et/ou récepteur de données dudit ensemble comprend une unité de commande des caméras configurée pour commander une prise dite simultanée d'images par les caméras avec un déphasage ou décalage temporel dans l'acquisition d'images entre deux caméras au plus égal à 5 millisecondes.

### Brève description des dessins

L'invention sera bien comprise à la lecture de la description suivante d'exemples de réalisation, en référence aux dessins annexés dans lesquels :
[Fig. 1] représente une vue schématique d'un ensemble conforme à l'invention ;
[Fig. 2] représente une vue schématique de la disposition des caméras sur le support commun pour matérialiser la zone d'intersection des angles de vue desdites caméras correspondant au volume à observer ;

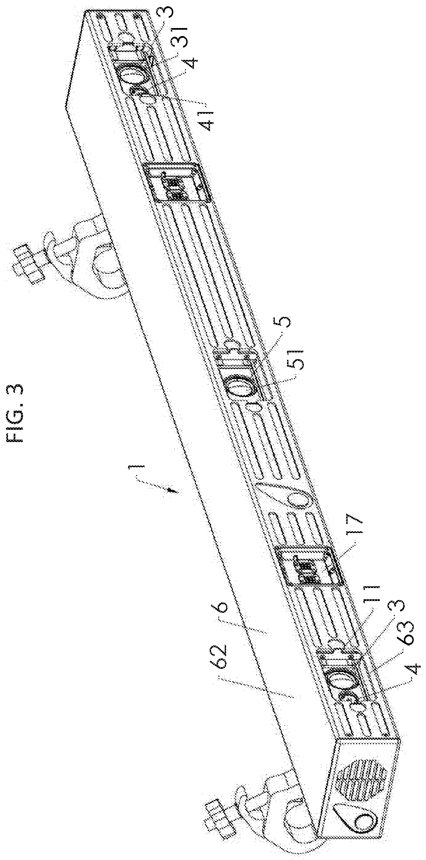

[Fig. 3] représente une vue en perspective d'un dispositif conforme à l'invention ;
[Fig. 4] représente une vue en position éclatée des éléments du dispositif conforme à l'invention ;

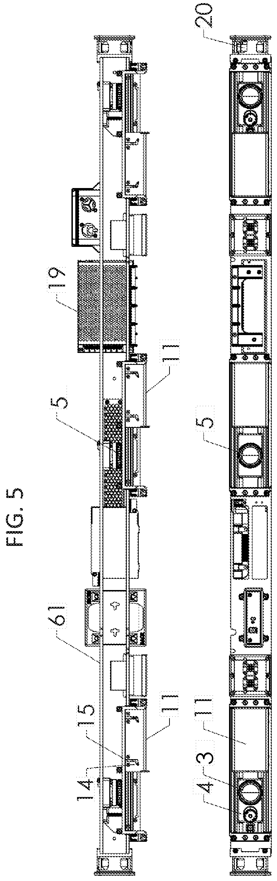

[Fig. 5] représente une vue de dessus et une vue de face de la base support ;

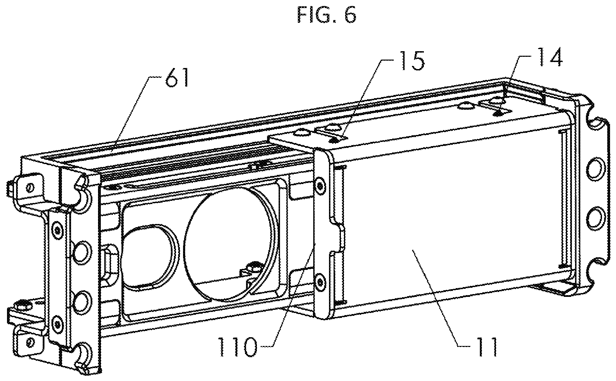

[Fig. 6] représente une vue partielle en perspective d'une partie de la base support équipée d'un capot de protection en position inactive dudit capot ;

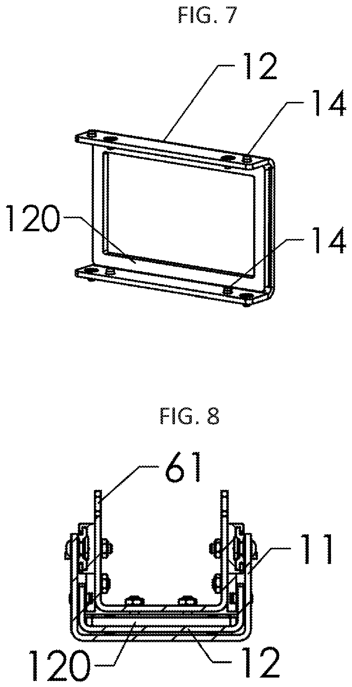

[Fig. 7] représente une vue en perspective d'un cache ;
[Fig. 8] représente une vue en coupe de la base support prise au niveau du capot de protection ;
[Fig. 9] représente une vue partielle en perspective du support commun prise au niveau d'un cache de protection, ledit cache de protection étant en position inactive ;
[Fig. 10] représente une vue partielle en coupe de la base support prise au niveau d'un cache de protection, ledit cache de protection étant en position inactive ;
[Fig. 11] représente une vue partielle en perspective du support commun prise au niveau d'un cache de protection, ledit cache de protection étant en position active ;
[Fig. 12] représente une vue partielle en coupe de la base support prise au niveau d'un cache de protection, ledit cache de protection étant en position active ;

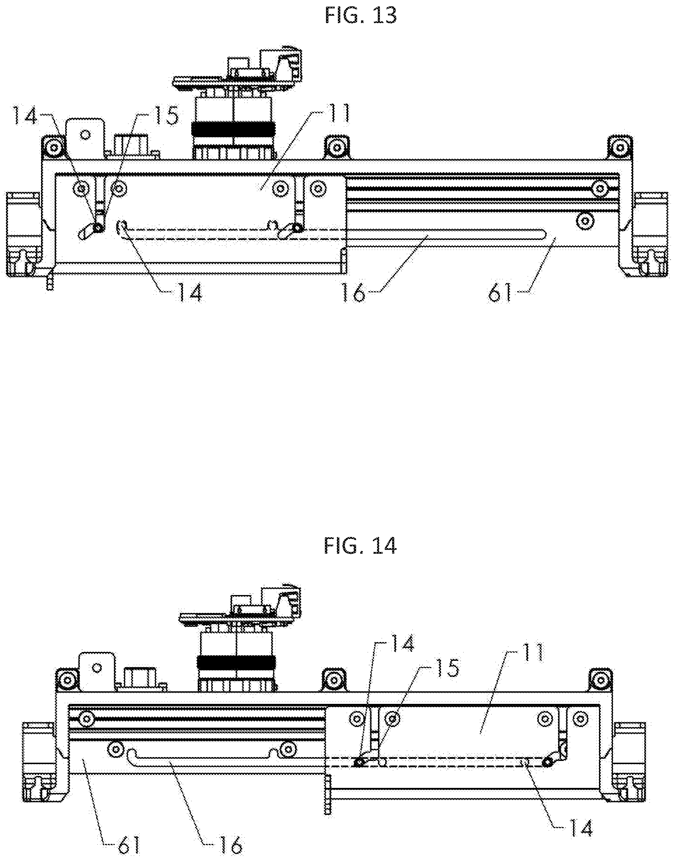

[Fig. 13] représente une vue partielle en coupe de la base support prise au niveau d'un cache de protection en position active du cache de protection ;
[Fig. 14] représente une vue partielle en coupe de la base support prise au niveau d'un cache de protection en position inactive du cache de protection.

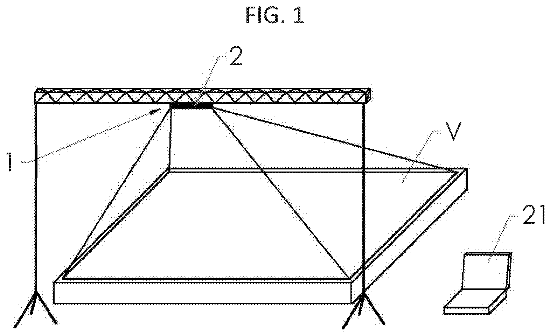

Comme mentionné ci-dessus, l'invention a pour objet un dispositif 1 notamment pour la détection, éventuellement l'identification d'au moins une cible mobile ou immobile à l'intérieur d'un volume V déterminé correspondant, dans l'exemple représenté à la figure 1, à une scène de spectacle. Bien évidemment, ce volume V déterminé peut être un volume autre qu'une scène de spectacle, sans sortir du cadre de l'invention.

La ou les cibles à détecter peuvent être des êtres vivants, tels que des artistes ou des animaux se déplaçant à l'intérieur du volume V.

Le dispositif 1 objet de l'invention comprend donc un système 2 d'acquisition d'images formant un ensemble de données brutes qui peuvent, en temps réel, être adressées directement ou après prétraitement, à un système 21 récepteur de données, tel qu'un serveur et/ou un ordinateur dédié qui, après traitement, peut adresser le résultat du traitement des données vers des systèmes tiers de gestion du son et/ou de la lumière et/ou de la vidéo, de manière en soi connue. Le détail du traitement des données ne sera pas décrit ci-après.

Le dispositif 1 objet de l'invention a pour objet l'acquisition des données d'images dans de bonnes conditions pour en permettre un traitement optimal.

Le dispositif 1 doit être positionné de manière à permettre une vision sans obstacle de la scène. Ainsi, généralement et comme l'illustre la figure 1, le dispositif 1 est généralement disposé le long de l'un des bords supérieurs du parallélépipède délimitant la scène.

Ainsi, le dispositif 1 est disposé en hauteur, sur le devant de la scène, et est dirigé vers la scène pour avoir une vue d'ensemble de la scène. Dans l'exemple représenté, la scène peut avoir une dimension de 10 mètres x 10 mètres x 10 mètres. Bien évidemment, dans le cas d'une scène de très grande dimension, plusieurs dispositifs 1 peuvent être prévus.

Le système 2 d'acquisition d'images comprend au moins trois types de caméras, à savoir au moins une caméra 3 infrarouge encore appelée « caméra NIR » ou « proche infrarouge », cette caméra 3 infrarouge étant sensible aux ondes dont la longueur d'onde est comprise entre 780 et 1 400 nanomètres, au moins une caméra 4 thermique sensible aux ondes comprises entre 3 et 14 micromètres et au moins une caméra 5 dite visible, sensible aux ondes comprises entre 350 et 780 nanomètres. Ces différentes caméras 3, 4, 5 sont montées de manière fixe sur un support 6 commun, de sorte que la position relative des différentes caméras est connue.

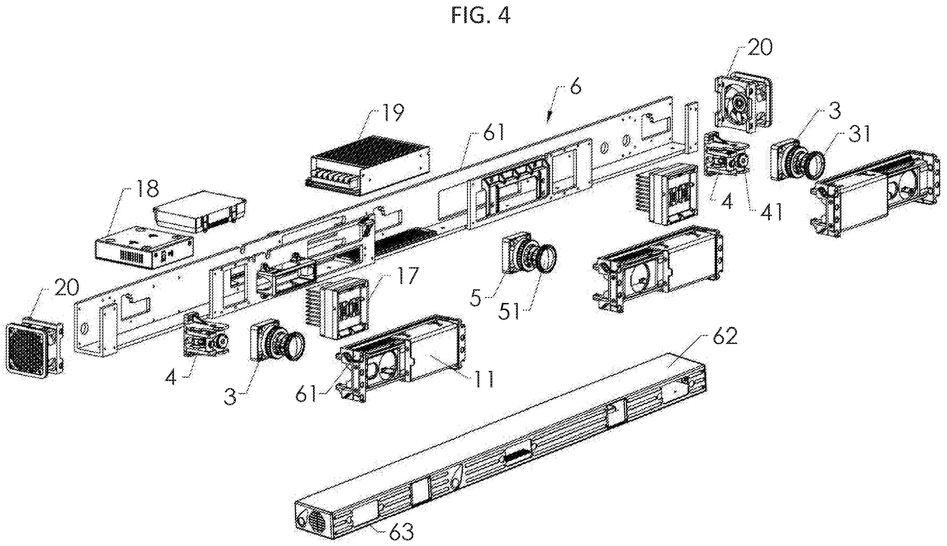

Ce support 6 commun se présente extérieurement sous forme d'un corps allongé de type poutre. Généralement, et comme illustré à la figure 4, le support 6 commun comprend une base 61 support de réception des caméras qui se présente sous forme d'un corps allongé. Ce corps allongé est ici à section transversale en U. Ce corps allongé peut être réalisé en une ou plusieurs pièces. Le support 6 commun comprend encore une enveloppe 62 de type fourreau à l'intérieur de laquelle la base 61 support est configurée pour s'insérer au moins partiellement. Cette enveloppe 62 se présente sous forme d'un corps creux allongé de forme parallélépipédique, ce corps creux étant muni, le long de l'une de ses faces, d'ouvertures 63 décalées axialement le long dudit corps.

Ces ouvertures 63 de l'enveloppe 62 s'étendent en regard d'ouvertures ménagées dans l'une des faces de la base 61 support.

Ces ouvertures 63 s'étendent au niveau des optiques des caméras 3, 4 et 5 disposées sur la base 61 support, à l'état inséré de la base 61 support dans ladite enveloppe 62 fourreau.

L'enveloppe 62 présente une longueur, de préférence comprise entre 1,20 mètre et 1,80 mètre, une largeur comprise entre 10 et 20 centimètres et une hauteur comprise entre 8 et 12 centimètres. Le poids total du support 6 commun après réception de l'ensemble des éléments qu'il doit supporter est de préférence compris entre 10 et 20 kilos. Dans l'exemple représenté, le support 6 commun présente des dimensions extérieures longueur x largeur x hauteur de 1 450 mm x 150 mm x 88 mm et le poids est de 15 kilos. Le support 6 commun est donc un support portable.

Pour faciliter sa mise en place, le support 6 commun comprend un ou plusieurs organes 10 d'accrochage. Ces organes 10 d'accrochage affectent ici la forme de crochets disposés sur l'enveloppe. Des points d'ancrage auxquels des élingues peuvent être fixées sont également prévus sur ladite enveloppe 62.

Chaque caméra 3, 4, 5 comprend bien évidemment une optique pouvant encore être appelée objectif. Cette optique est représentée en 31 pour une caméra 3 infrarouge, en 41 pour une caméra 4 thermique et en 51 pour une caméra 5 visible.

Chaque caméra 3, 4, 5 comprend un axe optique représenté en 9 aux figures, un champ de vision ou angle de vue représenté en 7 aux figures. Chaque caméra 3, 4, 5 comprend encore un centre optique.

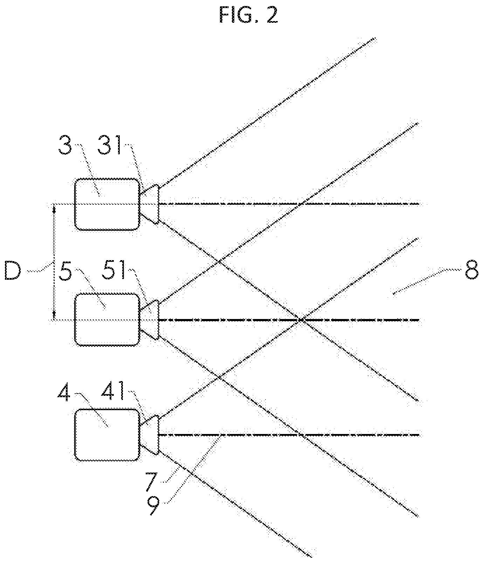

De manière caractéristique à l'invention, les caméras 3, 4, 5 sont disposées sur le support 6 commun avec les angles de vue desdites caméras présentant une zone 8 d'intersection correspondant au volume V à observer, comme l'illustre la figure 2.

Les axes optiques desdites caméras 3, 4, 5 disposées sur le support 6 commun sont distincts et la distance D entre les axes optiques d'au moins deux des caméras 3, 4, 5 est comprise entre 10 centimètres et 2 mètres.

Dans les exemples représentés, l'angle de vue de chaque caméra 3, 4, 5 est inférieur à 90°, les axes optiques des caméras 3, 4, 5 sont parallèles et les angles de vue des caméras 3, 4, 5 sont identiques d'une caméra à une autre.

Les caméras 3 infrarouges sont au nombre de deux, de même que les caméras 4 thermiques. La caméra 5 visible est disposée sur le support 6 commun entre une caméra 4 thermique et une caméra 3 infrarouge. En particulier, les caméras sont disposées sur le support 6 commun, pour former depuis une extrémité vers l'autre extrémité du support 6 allongé une succession de caméras comprenant au moins une caméra thermique, une caméra infrarouge, une caméra visible, une caméra thermique et une caméra infrarouge.

Pour permettre une alimentation électrique desdites caméras, un bloc 19 d'alimentation basse tension est embarqué sur la base 61 support.

Le support 6 commun porte en sus des caméras 3, 4, 5 au moins un émetteur 17 de lumière, non visible à l'œil nu.

Dans les exemples représentés, les émetteurs 17 de lumière qui sont au nombre de deux sont des projecteurs infrarouges de type LED, qui émettent de préférence à l'intérieur d'une plage de longueurs d'onde comprises entre 780 et 1400 nm pour permettre une détection de ladite lumière par la ou les caméras 3 infrarouges. Ces émetteurs 17 de lumière sont disposés sur la base 61 support, de part et d'autre de la caméra 5 visible, entre la caméra 5 visible et l'une des caméras infrarouges pour l'un des émetteurs 17 de lumière et entre la caméra 5 visible et une caméra thermique pour l'autre des émetteurs de lumière.

À nouveau, ces émetteurs 17 de lumière sont disposés en regard d'une ouverture 63 de l'enveloppe 62 et d'une ouverture de la base support 61 et sont orientés pour éclairer le volume V à observer.

Un bloc alimentation de ces émetteurs 17 de lumière est prévu.

Chaque extrémité de la base 61 support est équipée d'un ventilateur 20.

Pour parfaire l'ensemble, le dispositif 1 comprend pour au moins l'une des caméras au moins un capot 11 de protection de l'optique de ladite caméra monté à coulissement le long d'un axe parallèle à l'axe longitudinal du support 6 commun allongé, pour un déplacement de la partie 110 dite active du capot 11 entre une position active de protection de l'optique de la caméra dans laquelle la partie active du capot s'étend au moins partiellement en regard de ladite optique de la caméra et une position inactive dans laquelle l'optique de la caméra est non masquée.

La partie 110 active du capot 11 est munie intérieurement, côté surface du capot 11 en regard de l'optique en position active de ladite partie 110 active du capot 11, d'un cache 12 monté mobile dans le sens d'un rapprochement ou d'un écartement de la partie 110 active du capot 11. Le cache 12 forme, en position écartée du capot 11 et en position active du capot 11, dans laquelle la partie active du capot s'étend au moins partiellement en regard de ladite optique de la came, une chambre 13 coiffant au moins l'optique de la caméra.

Cette chambre 13 interposée entre le capot et l'optique de la caméra isole l'optique de la caméra du capot 11.

Cette chambre 13, dite fermée de manière étanche à la poussière permet d'éviter la dépose de poussière sur l'optique de la ou des caméras en regard dudit cache 12.

Dans les exemples représentés, le dispositif comprend trois capots 11, à savoir un premier capot pour la caméra 5 visible et deux autres capots servant chacun à protéger une paire de caméras formée d'une caméra thermique et d'une caméra infrarouge.

Chaque capot 11 affecte la forme d'un U avec l'âme du U formant la partie 110 active du capot 11. Chaque capot 11 est disposé à l'intérieur de l'enveloppe 62 du support 6 commun, entre l'enveloppe 62 et la base 61 support.

La partie de la base 61 support sur laquelle le capot 11 et le cache 12 coulissent est réalisée sous forme d'un bloc monté de manière amovible sur le reste de la base 61 support. Ce montage permet une maintenance facilitée des capots et des caches.

Au moins l'un, de préférence chacun des capots 11 est, pour son déplacement à coulissement, actionnable soit manuellement, soit à l'aide d'un dispositif d'entraînement en déplacement commandable à distance. Ce dispositif d'entraînement en déplacement peut être formé d'une vis sans fin motorisée ou d'un dispositif de transmission de mouvement motorisé à courroie ou à chaîne auquel les capots sont couplés.

L'âme du U est bordée intérieurement d'un cadre 120 en mousse. Ce cadre 120 est plaqué contre la partie de la base 61 support entourant l'optique des caméras devant être protégées par un cache 12 en position écartée du cache 12 du capot 11 et en position active du capot 11. Ce cadre en mousse assure une isolation aux poussières de la chambre 13 décrite ci-dessus.

Le cache 12 affecte de manière similaire au capot 11 la forme d'une pièce en U. Chaque branche du U de la pièce constitutive du cache 12 est munie d'organes 14 de guidage réalisés ici sous forme de pions. Certains de ces organes 14 de guidage sont disposés à l'intérieur du U sur les branches du U, pour venir en prise avec un chemin 16 de guidage, tel qu'une rainure, ménagée sur le support 6 commun, en particulier sur une face de la base 61 support jouxtant la face de la base 61 support munie d'ouvertures pour les optiques des caméras.

D'autres de ces organes 14 de guidage sont disposés à l'intérieur du U sur les branches du U, pour venir en prise avec un chemin 15 de guidage ménagé dans le capot 11.

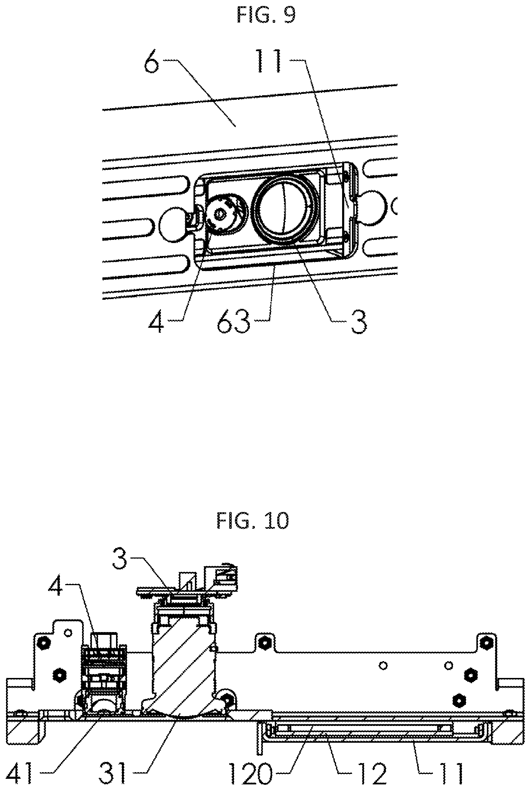

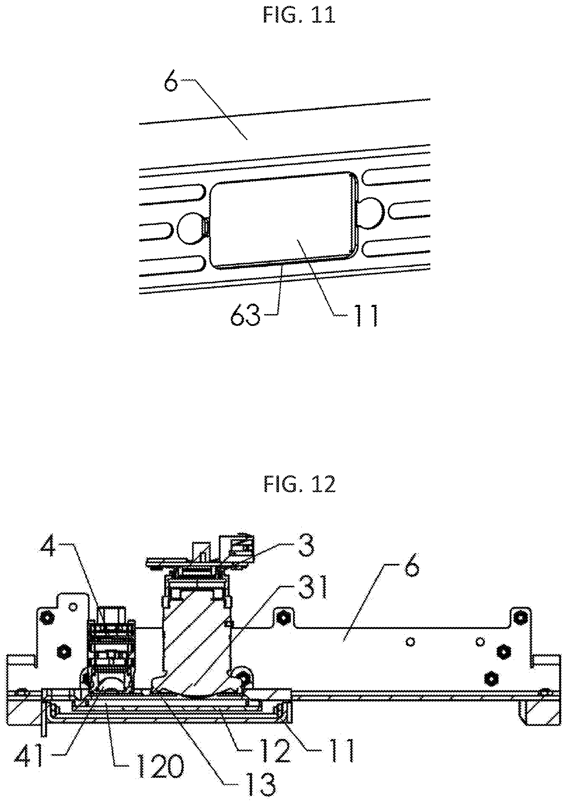

Les chemins 15 et 16 de guidage sont configurés, c'est-à-dire conformés et dimensionnés pour permettre, en parallèle du passage du capot 11 de protection de la position inactive à la position active, le passage du cache 12 de la position rapprochée du capot 11 de protection à une position éloignée du capot 11 de protection. Ce déplacement est illustré par les figures 10 et 12.

Pour parfaire le dispositif 1, le dispositif comprend au moins un système 18 de communication, configuré pour permettre une communication des caméras du système 2 d'acquisition d'images avec au moins un système 21 émetteur et/ou récepteur de données déporté.

Dans les exemples représentés, ce système 18 de communication comprend un commutateur Ethernet encore appelé switch Ethernet embarqué sur la base 61 support.

Ce système 18 de communication peut notamment transférer les données brutes ou prétraitées de chaque caméra à un système récepteur de données, tel qu'un serveur ou un ordinateur dédié. Ce système récepteur permet de calibrer le réseau des caméras pour que chaque caméra soit précisément positionnée dans l'environnement 3D absolu et de traiter les données afin de détecter les cibles et adresser les positions de ces cibles à des systèmes audiovisuels.

Ce système récepteur de données est généralement également un système émetteur de données qui comprend une unité de commande des caméras et de l'ensemble des composants équipant le support 6 commun tels que les émetteurs de lumière.

De préférence, l'unité de commande est configurée pour commander une prise dite simultanée d'images par les caméras avec un déphasage ou décalage temporel dans l'acquisition d'images entre deux caméras au plus égal à 5 millisecondes. Cette unité de commande se présente sous la forme d'un système électronique et informatique qui comprend par exemple un microprocesseur et une mémoire de travail. Lorsqu'il est précisé que l'unité est configurée pour réaliser une opération, cela signifie que l'unité comprend des instructions informatiques et les moyens d'exécution correspondants qui permettent de réaliser ladite opération et/ou que l'unité comprend des composants électroniques correspondants.

Au moins les caméras thermiques et les caméras infrarouges sont configurées pour fonctionner en stéréovision.

Le détail des émetteurs et/ou récepteurs de données ne sera pas fourni ci-après, car il est bien connu à ceux versés dans cet art.

Grâce à la conception du dispositif tel que décrit ci-dessus, il est possible, de manière aisée, d'installer un tel dispositif au-dessus d'une scène et de détecter les cibles sur la scène sans avoir à prééquiper lesdites cibles d'un système de détection quelconque.

## Revendications

1. Dispositif (1) pour la détection et éventuellement l'identification d'au moins une cible à l'intérieur d'un volume (V) déterminé, ledit dispositif (1) comprenant un système (2) d'acquisition d'images, le système (2) d'acquisition d'images comprenant,
- au moins une caméra (3) infrarouge sensible aux ondes dont la longueur d'onde est comprise entre 780 et 1400 nm,
- une caméra (4) thermique sensible aux ondes comprises entre 3000 et 14000 micromètres et
- une caméra (5) dite visible sensible aux ondes comprises entre 350 et 780 nm,
en ce que lesdites caméras (3, 4, 5) sont montées sur un support (6) commun se présentant sous forme d'un corps allongé de type poutre, en ce que les caméras (3, 4, 5) sont disposées sur le support (6) commun avec les champs de vision desdites caméras (3, 4, 5) présentant une zone (8) d'intersection correspondant au volume (V) à observer, en ce que les axes optiques desdites caméras (3, 4, 5) disposées sur le support (6) commun sont distincts, en ce que la distance (D) entre les axes optiques d'au moins deux des caméras (3, 4, 5) est comprise entre 10 cm et 2 m, en ce que le dispositif (1) comprend, pour au moins l'une des caméras (3, 4, 5), au moins un capot (11) de protection de l'optique de ladite caméra (3, 4, 5) monté à coulissement le long d'un axe parallèle à l'axe longitudinal du support (6) commun allongé pour un déplacement de la partie (110) dite active dudit capot (11) entre une position active de protection de l'optique de la caméra (3, 4, 5) dans laquelle la partie (110) active du capot (11) s'étend au moins partiellement en regard de ladite optique de la caméra (3, 4, 5) et une position inactive dans laquelle l'optique de la caméra (3, 4, 5) est non masquée, en ce que la partie (110) active du capot (11) est munie intérieurement, côté surface du capot (11) en regard de l'optique, en position active de ladite partie (110) active du capot (11) d'un cache (12) monté mobile dans le sens d'un rapprochement ou d'un écartement de la partie (110) active du capot (11), ledit cache (12) formant, en position écartée du capot (11) et en position active du capot (11), une chambre (13) coiffant au moins l'optique de la caméra (3, 4, 5), cette chambre (13) interposée entre le capot (11) et l'optique de la caméra (3, 4, 5) isolant l'optique de la caméra (3, 4, 5) du capot (11).

2. Dispositif (1) selon la revendication 1, **caractérisé en ce que** le support (6) commun est portable et est muni d'au moins un organe d'accrochage.

3. Dispositif (1) selon l'une des revendications 1 ou 2, **caractérisé en ce que** le support (6) commun comprend une base (61) support de réception des caméras (3, 4, 5), une enveloppe (62) de type fourreau à l'intérieur de laquelle la base (61) support est configurée pour s'insérer au moins partiellement, ladite enveloppe (62) fourreau étant munie d'ouvertures (63), au moins certaines des ouvertures (63) s'étendant au niveau des optiques des caméras (3, 4, 5) disposées sur la base (61) support à l'état inséré de la base (61) support dans ladite enveloppe (62) fourreau.

4. Dispositif (1) selon l'une des revendications 1 à 3, **caractérisé en ce que** le ou au moins l'un des capots (11) affecte la forme d'un U avec l'âme du U formant la partie (110) active du capot (11) et **en ce que** le cache (12) est, pour son déplacement entre une position écartée et une position rapprochée du capot (11), équipé d'organes (14) de guidage en prise respectivement l'un ou les uns avec au moins un chemin (15) de guidage ménagé sur le capot (11), l'autre ou les autres avec au moins un chemin (16) de guidage ménagé sur le support (6) commun.

5. Dispositif (1) selon l'une des revendications 1 à 4, **caractérisé en ce que** l'angle de vue de chaque caméra (3, 4, 5) est inférieur à 90°.

6. Dispositif (1) selon l'une des revendications 1 à 5, **caractérisé en ce que** la ou l'une des caméras (5) visibles est disposée sur le support (6) commun au moins entre une caméra (4) thermique et une caméra (3) infrarouge.

7. Dispositif (1) selon l'une des revendications 1 à 6, **caractérisé en ce que** les caméras (3) infrarouges sont au moins au nombre de deux de même que les caméras (4) thermiques.

8. Dispositif (1) selon l'une des revendications 1 à 7, **caractérisé en ce que** le support (6) commun porte en sus des caméras (3, 4, 5) au moins un émetteur (17) de lumière non visible à l'œil nu.

9. Dispositif (1) selon l'une des revendications 1 à 8, **caractérisé en ce que** les axes optiques des caméras (3, 4, 5) sont parallèles et/ou les angles de vue des caméras (3, 4, 5) sont identiques d'une caméra à une autre.

10. Dispositif (1) selon l'une des revendications 1 à 9, **caractérisé en ce qu'**il comprend au moins un système (18) de communication configuré pour permettre une communication des caméras (3, 4, 5) du système (2) d'acquisition d'images avec au moins un système (21) émetteur et/ou récepteur de données.

11. Ensemble comprenant au moins un système (21) émetteur et/ou récepteur de données et un dispositif (1) selon l'une des revendications 1 à 10, le ou au moins l'un des systèmes (21) émetteur et/ou récepteur de données et les caméras (3, 4, 5) du système (2) d'acquisition sont configurés pour communiquer entre eux.

## Patentansprüche

1. Vorrichtung (1) zum Erfassen und gegebenenfalls Identifizieren mindestens eines Ziels innerhalb eines bestimmten Volumens (V), wobei die Vorrichtung (1) ein Bildaufnahmesystem (2) umfasst,
das Bildaufnahmesystem (2) umfassend:
- mindestens eine Infrarotkamera (3), die auf Wellen mit einer Wellenlänge zwischen 780 und 1400 nm empfindlich ist,
- eine Wärmebildkamera (4), die auf Wellen zwischen 3000 und 14.000 Mikrometern empfindlich ist, und
- eine sogenannte sichtbare Kamera (5), die auf Wellen zwischen 350 und 780 nm empfindlich ist,
dass die Kameras (3, 4, 5) auf einem gemeinsamen Träger (6) in Form eines länglichen, balkenartigen Körpers angebracht sind, dass die Kameras (3, 4, 5) auf dem gemeinsamen Träger (6) so angeordnet sind, dass die Sichtfelder der Kameras (3, 4, 5) einen Schnittbereich (8) aufweisen, der dem zu beobachtenden Volumen (V) entspricht, dass die optischen Achsen der auf dem gemeinsamen Träger (6) angeordneten Kameras (3, 4, 5) voneinander getrennt sind, dass der Abstand (D) zwischen den optischen Achsen von mindestens zwei der Kameras (3, 4, 5) zwischen 10 cm und 2 m beträgt, dass die Vorrichtung (1) für mindestens eine der Kameras (3, 4, 5) mindestens eine Schutzabdeckung (11) für die Optik der Kamera (3, 4, 5) umfasst, die entlang einer zu der Längsachse des gemeinsamen, länglichen Trägers (6) parallelen Achse gleitend beweglich ist, um den sogenannten aktiven Teil (110) der Abdeckung (11) zwischen einer aktiven Position zum Schutz der Optik der Kamera (3, 4, 5), in der sich der aktive Teil (110) der Abdeckung (11) mindestens teilweise gegenüber der Optik der Kamera (3, 4, 5) erstreckt, und einer inaktiven Position zu bewegen, in der die Optik der Kamera (3, 4, 5) nicht verdeckt ist, dass der aktive Teil (110) der Abdeckung (11) innen, auf der der Optik gegenüberliegenden Seite der Abdeckung (11), in der aktiven Position des aktiven Teils (110) der Abdeckung (11) mit einer Abdeckung (12) versehen ist, die in Richtung einer Annäherung oder einer Entfernung des aktiven Teils (110) der Abdeckung (11) beweglich angebracht ist, wobei die Abdeckung (12) in der von der Abdeckung (11) entfernten Position und in der aktiven Position der Abdeckung (11) eine Kammer (13) bildet, die mindestens die Optik der Kamera (3, 4, 5) überdeckt, wobei diese Kammer (13) zwischen der Abdeckung (11) und der Optik der Kamera (3, 4, 5) angeordnet ist und die Optik der Kamera (3, 4, 5) von der Abdeckung (11) isoliert.

2. Vorrichtung (1) nach Anspruch 1, **dadurch gekennzeichnet, dass** der gemeinsame Träger (6) tragbar ist und mit mindestens einem Befestigungselement versehen ist.

3. Vorrichtung (1) nach einem der Ansprüche 1 oder 2, **dadurch gekennzeichnet, dass** der gemeinsame Träger (6) eine Trägerbasis (61) zur Aufnahme der Kameras (3, 4, 5), eine hülsenförmige Umhüllung (62), in der die Trägerbasis (61) so konfiguriert ist, dass sie mindestens teilweise eingesetzt ist, umfasst, wobei die hülsenförmige Umhüllung (62) mit Öffnungen (63) versehen ist, wobei sich mindestens einige der Öffnungen (63) auf Höhe der Optiken der Kameras (3, 4, 5) erstrecken, die an der Trägerbasis (61) angeordnet sind, wenn die Trägerbasis (61) in die hülsenförmige Umhüllung (62) eingesetzt ist.

4. Vorrichtung (1) nach einem der Ansprüche 1 bis 3, **dadurch gekennzeichnet, dass** die oder mindestens eine der Abdeckungen (11) die Form eines U aufweist, wobei der Steg des U den aktiven Teil (110) der Abdeckung (11) bildet, und dass die Abdeckung (12) für ihre Bewegung zwischen einer von der Abdeckung (11) entfernten Position und einer dieser angenäherten Position mit Führungselementen (14) ausgestattet ist, von denen jeweils eines oder mehrere mit mindestens einer an der Abdeckung (11) ausgebildeten Führungsbahn (15) und das andere oder die anderen mit mindestens einer an dem gemeinsamen Träger (6) ausgebildeten Führungsbahn (16) in Eingriff stehen.

5. Vorrichtung (1) nach einem der Ansprüche 1 bis 4, **dadurch gekennzeichnet, dass** der Blickwinkel jeder Kamera (3, 4, 5) kleiner als 90° ist.

6. Vorrichtung (1) nach einem der Ansprüche 1 bis 5, **dadurch gekennzeichnet, dass** die oder eine der sichtbaren Kameras (5) auf dem gemeinsamen Träger (6) mindestens zwischen einer Wärmebildkamera (4) und einer Infrarotkamera (3) angeordnet ist.

7. Vorrichtung (1) nach einem der Ansprüche 1 bis 6, **dadurch gekennzeichnet, dass** mindestens zwei Infrarotkameras (3) sowie mindestens zwei Wärmebildkameras (4) vorhanden sind.

8. Vorrichtung (1) nach einem der Ansprüche 1 bis 7, **dadurch gekennzeichnet, dass** der gemeinsame Träger (6) zusätzlich zu den Kameras (3, 4, 5) mindestens einen für das bloße Auge nicht sichtbaren Lichtsender (17) trägt.

9. Vorrichtung (1) nach einem der Ansprüche 1 bis 8, **dadurch gekennzeichnet, dass** die optischen Achsen der Kameras (3, 4, 5) parallel sind und/oder die Blickwinkel der Kameras (3, 4, 5) von einer Kamera zur anderen identisch sind.

10. Vorrichtung (1) nach einem der Ansprüche 1 bis 9, **dadurch gekennzeichnet, dass** sie mindestens ein Kommunikationssystem (18) umfasst, das so konfiguriert ist, dass es eine Kommunikation der Kameras (3, 4, 5) des Bildaufnahmesystems (2) mit mindestens einem Datensende- und/oder -empfangssystem (21) ermöglicht.

11. Anordnung, umfassend mindestens ein Datensende- und/oder -empfangssystem (21) und eine Vorrichtung (1) nach einem der Ansprüche 1 bis 10, wobei das oder mindestens eines der Datensende- und/oder - empfangssysteme (21)
und die Kameras (3, 4, 5) des Aufnahmesystems (2) so konfiguriert sind, dass sie miteinander kommunizieren können.

## Claims

1. A device (1) for detecting and possibly identifying at least one target inside a determined volume (V), said device (1) comprising an image acquisition system (2), the image acquisition system (2) comprising,
- at least one infrared camera (3) sensitive to waves whose wavelength is between 780 and 1400 nm,
- a thermal camera (4) sensitive to waves between 3000 and 14000 micrometers and
- a camera (5), referred to as a visible camera, sensitive to waves between 350 and 780 nm,
in that said cameras (3, 4, 5) are mounted on a common support (6) in the form of an elongated beam-like body, in that the cameras (3, 4, 5) are disposed on the common support (6) with the fields of vision of said cameras (3, 4, 5) having an intersection zone (8) corresponding to the volume (V) to be observed, in that the optical axes of said cameras (3, 4, 5) disposed on the common support (6) are distinct, in that the distance (D) between the optical axes of at least two of the cameras (3, 4, 5) is between 10 cm and 2 m, in that the device (1) comprises, for at least one of the cameras (3, 4, 5), at least one cover (11) for protecting the optic of said camera (3, 4, 5), said cover being mounted so as to slide along an axis parallel to the longitudinal axis of the elongated common support (6) for movement of the part (110), referred to as active part, of said cover (11) between an active position for protecting the optic of the camera (3, 4, 5), in which the active part (110) of the cover (11) extends at least partially facing said optic of the camera (3, 4, 5), and an inactive position, in which the optic of the camera (3, 4, 5) is non-masked, in that the active part (110) of the cover (11) is provided internally, on the surface side of the cover (11) facing the optics in the active position of said active part (110) of the cover (11), with a shield (12) mounted so as to be able to move in the direction closer to or away from the active part (110) of the cover (11), said shield (12) forming, in a position moved away from the cover (11) and in the active position of the cover (11), a chamber (13) capping at least the optic of the camera (3, 4, 5), this chamber (13) interposed between the cover (11) and the optic of the camera (3, 4, 5) isolating the optic of the camera (3, 4, 5) from the cover (11).

2. The device (1) as claimed in claim 1, **characterized in that** the common support (6) is portable and is provided with at least one attachment member.

3. The device (1) according to either of claims 1 and 2, **characterized in that** the common support (6) comprises a support base (61) for receiving the cameras (3, 4, 5), a sleeve-type casing (62) inside which the support base (61) is configured to be at least partially inserted, said sleeve casing (62) being provided with openings (63), at least some of the openings (63) extending at the level of the optics of the cameras (3, 4, 5) disposed on the support base (61) in the state in which the support base (61) is inserted in said sleeve casing (62).

4. The device (1) as claimed in one of 1 to 3 claims, **characterized in that** the or at least one of the covers (11) has the shape of a U with the core of the U forming the active part (110) of the cover (11), and **in that**, for its movement between a position moved away from the cover (11) and a position close thereto, the shield (12) is equipped with guide members (14), one or some being in engagement with at least one guide path (15) provided on the cover (11), the other or others being in engagement with at least one guide path (16) provided on the common support (6).

5. The device (1) as claimed in one of claims 1 to 4, **characterized in that** the viewing angle of each camera (3, 4, 5) is less than 90°.

6. The device (1) as claimed in one of claims 1 to 5, **characterized in that** the or one of the visible cameras (5) is disposed on the common support (6) at least between a thermal camera (4) and an infrared camera (3).

7. The device (1) as claimed in one of claims 1 to 6, **characterized in that** the infrared cameras (3) are at least two in number, as are the thermal cameras (4).

8. The device (1) as claimed in one of claims 1 to 7, **characterized in that**, in addition to the cameras (3, 4, 5), the common support (6) bears at least one emitter (17) of light not visible to the naked eye.

9. The device (1) as claimed in one of claims 1 to 8, **characterized in that** the optical axes of the cameras (3, 4, 5) are parallel and/or the viewing angles of the cameras (3, 4, 5) are identical from one camera to another.

10. The device (1) as claimed in one of claims 1 to 9, **characterized in that** it comprises at least one communication system (18) configured to allow the cameras (3, 4, 5) of the image acquisition system (2) to communicate with at least one data transmitter and/or receiver system (21).

11. An assembly comprising at least one data transmitter and/or receiver system (21) and a device (1) in accordance with one of claims 1 to 10, the or at least one of the data transmitter and/or receiver systems (21) and the cameras (3, 4, 5) of the acquisition system (2) are configured to communicate.
